# DEMANDE DE BREVET EUROPEEN

(11) **EP 0 735 348 A1**
(43) Date de publication de la demande: **02.10.1996**
(21) Numéro de dépôt: 96400606.8
(22) Date de dépôt: 22.03.1996
(51) Int. Cl.: G01D 11/30

(54) **Dispositif support pour capteur de mesure**

(30) Priorité: 31.03.1995 FR 9503801
(71) Demandeur: S.N.R. ROULEMENTS, F-74010 Annecy Cédex (FR)
(72) Inventeur: Nicot, Christophe, 74000 Annecy (FR)
(74) Mandataire: Ernst-Schonberg, Michel

(57) **Abrégé**

Dispositif support (10) pour capteur de mesure (30) qui inclut une douille de serrage (11) montée dans un perçage (31) et qui exerce sur ledit capteur (30) un effort de retenue caractérisé par le fait que la paroi de la douille (11) porte des moyens élastiques de blocage (13, 13') de la douille dans le perçage et des moyens élastiques (16) de retenue axiale du capteur.

Application principale : mesure de vitesses

## Description

L'invention concerne un dispositif support pour capteur de mesure qui inclut une douille de serrage montée dans un perçage de montage et qui exerce sur ledit capteur de mesure un effort de retenue.

La publication EP-A 0092605 décrit une douille dans laquelle un capteur de vitesse est monté à déplacement et reçoit une poussée axiale en direction d'un élément codeur porté par la partie tournante d'un palier.

La sensibilité de détection d'une vitesse de rotation nécessite un positionnement précis et l'immobilisation du capteur dans le champ variable d'induction magnétique, généré par un élément codeur magnétique rotatif. Le positionnement et l'immobilisation du capteur sont d'autant plus importants que l'élément codeur possède une dimension réduite.

Par voie de conséquence la position axiale et angulaire du capteur par rapport à l'élément codeur doivent demeurer invariables au cours de la mesure de la vitesse.

Selon l'invention, la paroi de la douille de serrage du capteur, porte des moyens élastiques de blocage de ladite douille dans le perçage de montage et des moyens élastiques de retenue axiale du capteur.

Dans le dispositif ainsi réalisé, les moyens de blocage de la douille et les moyens de retenue du capteur constituent des appuis élastiques indépendamment de la localisation de l'élément codeur.

Le dispositif conforme à l'invention se propose de la sorte d'immobiliser et de positionner simultanément le capteur devant l'élément codeur et de faciliter le démontage en vue d'un remplacement éventuel de l'élément capteur.

D'autres caractéristiques et avantages de l'invention apparaîtront à la lecture de la description d'un exemple de réalisation du dispositif en référence du dessin annexé dans lequel :
- la figure 1 est une représentation perspective du dispositif support du capteur de mesure,
- la figure 2 est une vue en coupe axiale du dispositif représenté à la figure 1,
- la figure 3 est une représentation perspective d'une variante de réalisation du dispositif support du capteur de mesure,
- la figure 4 est une vue en coupe axiale du dispositif représenté à la figure 3,
- la figure 5 est une représentation d'un montage d'application du dispositif illustré à la figure 1 sur un palier de roulement monté dans un porte-fusée,
- la figure 6 est une représentation d'un montage d'application du dispositif illustré à la figure 3 sur un palier de roulement monté sur un porte-fusée,

Par souci de simplification on désignera dans la suite de la description les différents éléments et organes du dispositif dans ses variantes de réalisation par les mêmes références.

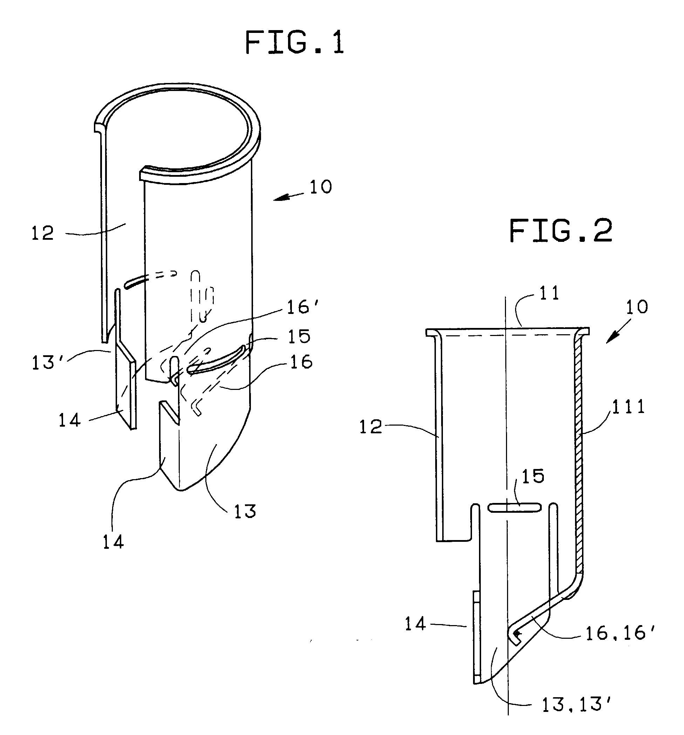

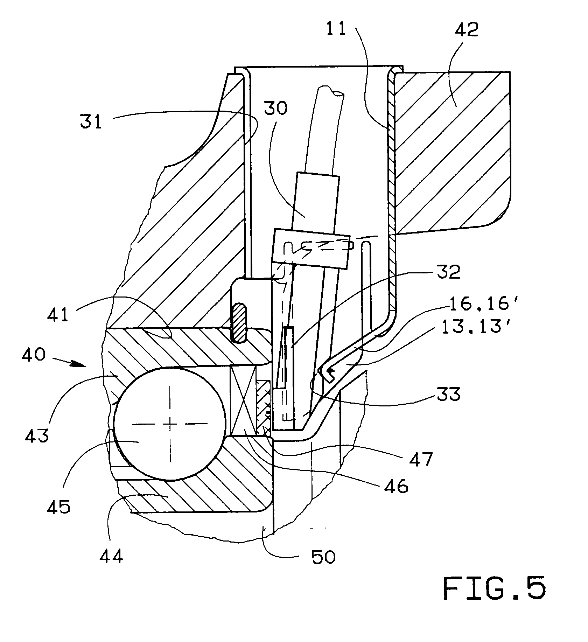

En référence aux figures 1, 2 et 5, le dispositif support désigné par la référence 10 dans son ensemble, enveloppe un capteur de mesure de vitesses 30 représenté à la figure 5.

Le capteur 30 inclut ainsi que cela est bien connu un élément de mesure d'un champ magnétique, intégré dans une tête de protection.

Le support 10 inclut essentiellement une douille cylindrique élastique de serrage 11, munie d'une fente longitudinale 12, destinée à être introduite dans un perçage de montage 31.

La paroi 111 de la douille 11 porte conformément à l'invention d'une part des moyens élastiques de blocage de celle-ci dans le perçage 31 et d'autre part des moyens élastiques de retenue axiale du capteur 30 à la suite de son introduction dans ladite douille.

Selon une caractéristique de l'invention, la douille possède deux doigts 13, 13' de blocage qui s'étendent axialement à une extrémité de la douille à l'extérieur du perçage 31. Chaque doigt tel que 13, 13' possède un pli dont le bord constitue une nervure de positionnement 14 engagée dans la rainure axiale correspondante 32 du capteur 30. Dans le but de favoriser la flexion et l'écartement radial de l'un et/ou l'autre doigt 13, 13' et le blocage de la douille dans son perçage 31 à la suite de l'introduction du capteur 30 dans la douille au contact de la nervure de positionnement 14, la zone de la racine du doigt porte à titre d'exemple non limitatif une boutonnière 15 représentée à la figure 2. La présence de la boutonnière réduit la rigidité de l'un et/ou l'autre doigt 13, 13' et favorise de ce fait une flexion longitudinale et l'écartement radial desdits doigts par suite du montage du capteur. La douille 11 porte par ailleurs un moyen qui assure la retenue élastique du capteur 30 au contact d'une rainure transversale 33 portée par la tête de protection dudit capteur. Un tel moyen de retenue peut être constitué par deux languettes découpées 16, 16'.

Selon une autre caractéristique de l'invention, les doigts de blocage 13, 13' et les languettes de retenue 16, 16' sont découpées dans une plaque de tôle préalablement à sa mise en forme suivant une configuration sensiblement cylindrique.

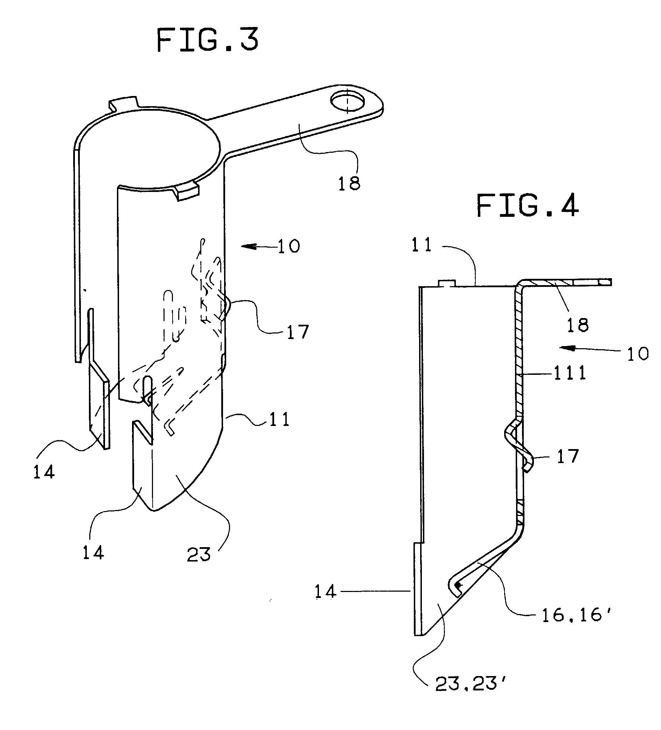

La variante du dispositif support représentée aux figures 3, 4, 6 est constituée à l'exemple du support précité par une douille 11 qui enveloppe le capteur 30.

La douille 11 possède une languette de blocage élastique 17 raccordée à la paroi 111 de la douille et qui exerce dans le cas présent, une force d'appui élastique F dont au moins une composante Fx, Fy coopère au positionnement axial et radial de la douille dans son perçage 31.

La douille 11 possède conformément à la variante représentée, une patte d'immobilisation 18 au contact du bord d'introduction de ladite douille dans le perçage 31. La patte d'immobilisation 18 compense de la sorte le manque d'effet de blocage des doigts d'extrémités 23, 23' munis de leur nervure de guidage 14.

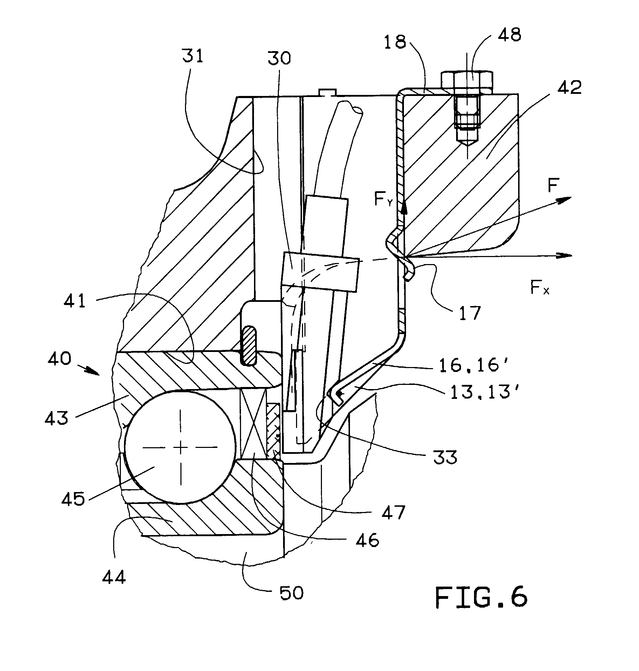

Les montages d'application du dispositif sur un palier à roulement sont décrits ci-après en référence des figures 5 et 6.

Le palier représenté aux figures 5 et 6 inclut un roulement 40 immobilisé dans l'alésage 41 d'un porte fusée 42 d'une roue de véhicule automobile.

Le roulement 40 est constitué ainsi que cela est bien connu par une bague extérieure fixe 43, une bague intérieure tournante 44 montée sur un arbre 50 et par des corps roulants 45 disposés entre les dites bagues.

La garniture d'étanchéité préassemblée désignée dans son ensemble par la référence 46 telle que décrite à titre d'exemple dans la publication EP-A-0607719 est montée entre lesdites bagues. Un élément codeur 47 solidaire en rotation de la bague tournante 44 ou de l'élément rotatif de la garniture d'étanchéité se déplace angulairement devant le capteur 30 retenu dans la douille de serrage 11 ainsi que cela a été décrit en référence des figures 1, 2, ou 3, 4. Le montage précité permet de la sorte le positionnement précis du capteur 30 devant le codeur 47 par l'intermédiaire de la douille 11.

En référence à la figure 6 il y a toutefois lieu de remarquer que la patte d'immobilisation 18 de la douille 11 au contact du bord d'introduction de la douille dans le perçage 31 du porte-fusée 42 reçoit un moyen de serrage additionnel constitué par une vis 48.

## Revendications

1. Dispositif support (10) pour capteur de mesure (30) qui inclut une douille de serrage (11) dont la paroi porte des moyens élastiques de blocage (13, 13') de ladite douille dans un perçage et des moyens élastiques (16) de retenue axiale du capteur respectivement constitués par des doigts de blocage et par des languettes de retenue découpées sur une plaque de tôle préalablement à sa mise en forme dans une configuration sensiblement cylindrique et dans lequel l'une desdites languettes d'immobilisation (16, 16') du capteur (30) et une languette de blocage (17) de la douille (11) sont raccordées à la paroi (111) de la dite douille, caractérisé par le fait que l'un au moins des doigts de blocage (13, 13') s'étend axialement à l'extérieur du perçage de montage (31) de la douille et porte une nervure de positionnement (14) coopérant avec une rainure axiale (32) du capteur (30), et une zone de flexion longitudinale (15) coopérant à l'écartement radial dudit doigt au cours du montage du capteur (30) dans sa douille (11) de serrage.

2. Dispositif support selon la revendication 1, caractérisé par le fait que la languette de blocage (17) exerce une force d'appui élastique dont les composantes coopèrent au positionnement axial et radial de la douille (11) dans le perçage de montage. (31).
